# EUROPEAN PATENT APPLICATION

(11) **EP 4 435 669 A1**
(43) Date of publication of application: **25.09.2024**
(21) Application number: 23213032.8
(22) Date of filing: 29.11.2023
(51) Int. Cl.: G06N 3/044, G06N 3/065, G06N 3/049, G06F 7/544

(54) **ANOMALY DETECTION DEVICE, ANOMALY DETECTION METHOD, AND COMPUTER-READABLE MEDIUM**

(30) Priority: 22.03.2023 JP 2023045483
(71) Applicant: Kabushiki Kaisha Toshiba, Tokyo 105-0023 (JP)
(72) Inventor: MARUKAME, Takao, Tokyo (JP); NOMURA, Kumiko, Tokyo (JP); MIZUSHIMA, Koichi, Tokyo (JP); NISHI, Yoshifumi, Tokyo (JP)
(74) Representative: Marks & Clerk LLP

(57) **Abstract**

According to an arrangement, an anomaly detection device (10) includes: an input unit (22) acquires a time-series input signal detected by observing an observation target device (100); an output unit (26) generates a plurality of multiplication signals by respectively multiplying a plurality of output signals each having a waveform having reproducibility for a waveform of the input signal, by output weights set in advance, and generates an integral signal obtained by time integration through adding up the plurality of multiplication signals; and a determination unit (28) determines whether the observation target device (100) is normal or abnormal based on a result of comparison between the integral signal and a threshold set in advance, and output a determination signal representing a determination result. The output weights each represent a positive predetermined value or a negative predetermined value, and are respectively set for the plurality of output signals.

## Description

### FIELD

The present disclosure relates to an anomaly detection device, an anomaly detection method, and a computer-readable medium.

### BACKGROUND

Artificial intelligence (AI) is used for various kinds of automation processing and labor-saving processing. A neural network is known as a typical AI algorithm. A deep neural network (DNN), which is a multilayered neural network, is used for deep learning algorithm. A recurrent neural network (RNN) in which a neuron close to an output is recursively connected to a neuron close to an input is used for time-series data processing. There is known a Long-Short-Term Memory (LSTM) as a neural network in which representation capacities for short-term memory and long-term memory are enhanced. The LSTM has higher applicability for time-series data processing.

In the RNN and the LSTM used for time-series data processing, an arithmetic operation is performed by using a central processing unit (CPU) serving as a general-purpose arithmetic unit. However, in the RNN and the LSTM, an arithmetic amount is larger than that of the NN, so that an arithmetic operation is often performed by using a General Purpose Graphical Processing Unit (GP-GPU). In the RNN and the LSTM, the arithmetic amount is further increased at the time of learning. Due to this, regarding the RNN and the LSTM, a learning time is long, and power consumption at the time of learning is large. Thus, to exhibit high performance of the deep learning in the RNN and the LSTM, it has been required to finely tune parameters in learning.

On the other hand, there is known reservoir computing as an algorithm for time-series data processing the arithmetic amount of which is small in learning. The reservoir computing includes an input unit, a reservoir unit, and an output unit. In the reservoir computing, the reservoir unit is not required to perform learning. However, in the reservoir computing, accuracy of a weight between the reservoir unit and the output unit should be increased to output a desired signal.

The reservoir unit is implemented by hardware using various media such as an electronic circuit. A signal output from the reservoir unit is typically an analog signal. The reservoir computing can process an arithmetic operation of an output weight of the output unit at high speed by a sum-of-products arithmetic unit using an analog circuit.

The reservoir computing can implement the reservoir unit using a light guide. Due to this, the reservoir computing can increase a speed of processing by the reservoir unit. However, in the reservoir computing, in a case of implementing the reservoir unit using the light guide, an arithmetic operation by the output unit should be digitally processed, and a speed of the processing is limited in the output unit.

Additionally, in the reservoir computing, in a case of implementing the output unit by an analog circuit, an output weight should be represented with very high resolution equal to or higher than 256-step gradation, for example, so that a circuit scale is increased. Furthermore, the reservoir computing can digitally perform the processing by the output unit after performing analog-to-digital conversion thereon. However, also in this case, the speed of the processing is limited in the output unit in the reservoir computing.

### BRIEF DESCRIPTION OF THE DRAWINGS

Fig. 1 is a diagram illustrating an anomaly detection device together with an observation target device;
Fig. 2 is a diagram illustrating a configuration of an anomaly detection device according to a first arrangement;
Fig. 3 is a diagram illustrating a simulation result of an integral signal;
Fig. 4 is a diagram illustrating a first example of a configuration of a determination unit;
Fig. 5 is a diagram illustrating a second example of the configuration of the determination unit;
Fig. 6 is a diagram illustrating a third example of the configuration of the determination unit;
Fig. 7 is a diagram illustrating a first example of a configuration of an output unit;
Fig. 8 is a diagram illustrating a second example of the configuration of the output unit;
Fig. 9 is a diagram illustrating a third example of the configuration of the output unit;
Fig. 10 is a diagram illustrating a fourth example of the configuration of the output unit;
Fig. 11 is a diagram illustrating a configuration of an anomaly detection device according to a second arrangement;
Fig. 12 is a diagram illustrating a configuration of an anomaly detection device according to a third arrangement; and
Fig. 13 is a diagram illustrating an example of a hardware configuration of an information processing device.

### DETAILED DESCRIPTION

According to an arrangement, an anomaly detection device includes an input unit, a reservoir unit, an output unit, and a determination unit. The input unit is configured to acquire a time-series input signal detected by observing an observation target device, and output a plurality of intermediate signals corresponding to the input signal. The reservoir unit is configured to acquire the plurality of intermediate signals, and output a plurality of output signals each having a waveform that has reproducibility for a waveform of the input signal. The output unit is configured to acquire the plurality of output signals, generate a plurality of multiplication signals by respectively multiplying the plurality of output signals by output weights set in advance, and generate an integral signal obtained by time integration through adding up the plurality of multiplication signals. The determination unit is configured to determine whether the observation target device is normal or abnormal based on a result of comparison between the integral signal and a threshold set in advance, and output a determination signal representing a determination result. The output weights by which the plurality of output signals are respectively multiplied, each represent a positive predetermined value or a negative predetermined value, and are respectively set for the plurality of output signals.

The following describes arrangements of the present invention with reference to the attached drawings.

### First arrangement

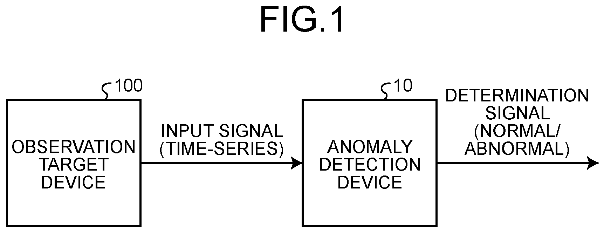

Fig. 1 is a diagram illustrating an anomaly detection device 10 according to a first arrangement together with an observation target device 100.

The anomaly detection device 10 detects whether an anomaly has occurred in the observation target device 100. The observation target device 100 continuously operates. For example, the observation target device 100 is a switching device for a power line, a power supply device, and the like in a power conversion facility or a power supply facility. The observation target device 100 is not limited to such devices, but may be any device that continuously operates.

The anomaly detection device 10 detects an anomaly that instantaneously occurs in the observation target device 100. For example, even in a period in which the observation target device 100 normally operates, the observation target device 100 may instantaneously perform an operation or behavior different from that in a normal state at irregular intervals. Such an operation or behavior is a sign of a fault or significant deterioration of capacity of the observation target device 100, for example. The anomaly detection device 10 according to the arrangement can find a sign of a fault or significant deterioration of capacity of the observation target device 100 by continuously detecting such an instantaneous anomaly in the observation target device 100 in real time.

The anomaly detection device 10 acquires an input signal the value of which changes in a time direction, that is, a time-series input signal, which is detected by observing the observation target device 100. In the present arrangement, the time-series input signal is an analog signal. The time-series input signal may be a digital signal generated by performing analog/digital conversion on an analog signal at predetermined sampling intervals.

The input signal is a signal that is detected by observing the observation target device 100, and is such that a value determined in advance is obtained by averaging the input signal in the time direction in a normal state. For example, in a case in which the observation target device 100 is a device that outputs AC power, the input signal may be a signal representing an amplitude of the AC power output by the observation target device 100. Alternatively, the input signal may be a signal obtained by detecting a ground potential, a power supply potential, or the like in the observation target device 100. The input signal may include noise such as white noise, which becomes 0 on average.

The anomaly detection device 10 then outputs a determination signal indicating whether an anomaly has occurred in the observation target device 100 or the observation target device 100 is normal based on the acquired input signal. The determination signal is transmitted to an information processing device managed by an administrator and the like. The determination signal may be transmitted to a server and the like via a network, for example, and transmitted to the information processing device managed by the administrator and the like from the server and the like.

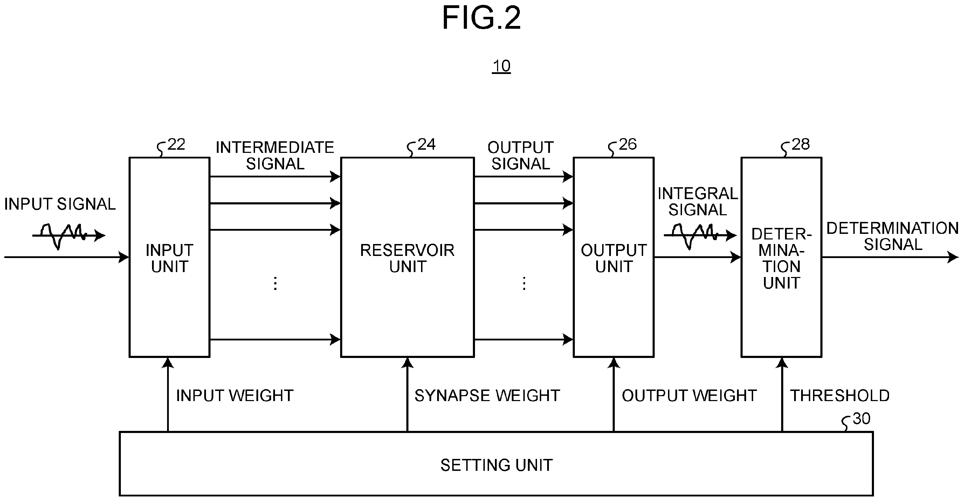

Fig. 2 is a diagram illustrating a configuration of the anomaly detection device 10 according to the first arrangement. The anomaly detection device 10 includes an input unit 22, a reservoir unit 24, an output unit 26, a determination unit 28, and a setting unit 30.

The input unit 22 acquires the input signal. The input unit 22 generates a plurality of time-series intermediate signals corresponding to the acquired input signal. The input unit 22 supplies the generated intermediate signals to the reservoir unit 24. Each of the intermediate signals is a signal obtained by multiplying the input signal by a plurality of input weights set in advance.

In a case in which the input signal is an analog signal and the reservoir unit 24 is an analog circuit, the input unit 22 generates a plurality of intermediate signals of the analog signal by an analog operation from the input signal. In a case in which the input signal is a digital signal and the reservoir unit 24 is a digital circuit, the input unit 22 generates a plurality of intermediate signals, each of which is a digital signal, from the input signal by a digital operation. In a case in which the input signal is an analog signal and the reservoir unit 24 is implemented by a digital circuit, the input unit 22 performs analog/digital conversion on the input signal, and generates a plurality of intermediate signals each of which is a digital signal.

In the present arrangement, the input unit 22 generates a plurality of intermediate signals each of which is an analog voltage signal.

Each of the input weights is set in advance by the setting unit 30. Each of the input weights may be a value having any accuracy or resolution. For example, each of the input weights may be a binary value. In this case, each of the input weights may be a binary value representing 0 or 1, or a binary value representing -1 or +1. In the input unit 22, each of the input weights is represented by a binary value, so that an arithmetic amount can be reduced and processing can be performed at high speed, and furthermore, an amount of information to be stored can be reduced and a circuit scale or a software program can be made small. The input unit 22 may further perform processing of adding or subtracting a reference signal or an offset to/from the input signal.

The reservoir unit 24 acquires a plurality of intermediate signals, and outputs a plurality of output signals each having a waveform that has reproducibility for a waveform of the input signal. In the present arrangement, the reservoir unit 24 is implemented by an analog circuit, and outputs a plurality of output signals each of which is an analog voltage signal based on the intermediate signals each of which is an analog voltage signal.

The reservoir unit 24 is a recurrent neural network including a plurality of neurons and a plurality of synapses which are recursively coupled with each other. In a case of being executed by a digital calculator, the reservoir unit 24 may be implemented by executing a software program such as an Echo State Network or a Liquid State Machine by a processor. The reservoir unit 24 may be a physical reservoir configured by a material or an electronic component having responsiveness to output a signal corresponding to the input signal.

In the present arrangement, the reservoir unit 24 is configured by a recurrent neural network including a plurality of delay elements. Each of the delay elements receives any of the intermediate signals, and delays the received intermediate signal. In this case, in the reservoir unit 24, a synapse weight is set for each of the delay elements, and each of the delay elements has a delay amount corresponding to the set synapse weight. In this case, in the reservoir unit 24, a connection relation among the delay elements may be randomly switched. The reservoir unit 24 outputs, as a plurality of output signals, signals output from two or more of the delay elements.

The reservoir unit 24 has reproducibility to output a plurality of output signals that perform the same operation and have the same waveform in a case of receiving input signals having the same waveform. That is, the reservoir unit 24 performs a deterministic operation. Thus, each of the output signals output from the reservoir unit 24 is a signal corresponding to the input signal although it is nonlinear with respect to the input signal. The reservoir unit 24 then temporarily holds information represented by the input signal therein. In the reservoir unit 24, an internal bond strength and a connection relation are randomly set. Accordingly, the reservoir unit 24 can output a plurality of output signals having randomness in accordance with a mechanism of the natural world. The reservoir unit 24 as described above can perform recursive and dynamic signal processing similarly to a brain of a person.

The output unit 26 acquires the output signals output from the reservoir unit 24. The output unit 26 generates a plurality of multiplication signals by multiplying each of the acquired output signals by an output weight set in advance. Furthermore, the output unit 26 generates an integral signal obtained by time integration through adding up the generated multiplication signals.

In the present arrangement, the output unit 26 is implemented by an analog circuit, acquires the output signals each of which is an analog voltage signal, and outputs the integral signal as an analog voltage signal.

Each of a plurality of the output weights is set by the setting unit 30 in advance. Each of the output weights represents a positive predetermined value or a negative predetermined value. For example, each of the output weights represents -1 or +1. Accordingly, by multiplying the output signal by the output weight representing a positive predetermined value, the output unit 26 outputs a multiplication signal having the same polarity as that of the output signal and an absolute value obtained by multiplying an absolute value of the output signal by a predetermined value. By multiplying the output signal by the output weight representing a negative predetermined value, the output unit 26 outputs a multiplication signal having polarity reverse to that of the output signal and an absolute value obtained by multiplying the absolute value of the output signal by a predetermined value.

Furthermore, the output weight multiplied by each of the output signals is independently set for each of the output signals by the setting unit 30. More specifically, a value of each of the output weight is set based on a random value. The output unit 26 then supplies, to the determination unit 28, the integral signal obtained by time integration through adding up the multiplication signals generated as described above.

The determination unit 28 acquires the integral signal from the output unit 26. For the determination unit 28, a threshold is set in advance by the setting unit 30. The determination unit 28 determines whether the observation target device 100 is normal or abnormal based on a result of comparison between the integral signal and the threshold set in advance. More specifically, the determination unit 28 determines that the observation target device 100 is abnormal in a case in which an absolute value of the integral signal is larger than the threshold, and determines that the observation target device 100 is normal in a case in which the absolute value of the integral signal is equal to or smaller than the threshold.

In the present arrangement, the determination unit 28 is implemented by an analog circuit, acquires the integral signal as an analog voltage signal, and a threshold voltage represented by an analog voltage is set as the threshold for the determination unit 28. The determination unit 28 then determines whether the observation target device 100 is normal or abnormal by comparing the threshold voltage with an absolute value signal as an analog voltage signal obtained by converting the integral signal into an absolute value.

Before an operation of determining an anomaly, the setting unit 30 sets a plurality of input weights for the input unit 22, sets a plurality of synapse weights for the reservoir unit 24, and sets a plurality of output weights for the output unit 26. Before the operation of determining an anomaly, the setting unit 30 sets internal connection of the reservoir unit 24.

For example, the setting unit 30 may set the input weights, the synapse weights, the output weights, and the internal connection of the reservoir unit 24 in accordance with a random number generated by a random number generator. Alternatively, the setting unit 30 may receive a random number at the time of factory shipment of the anomaly detection device 10 or before implementation of the anomaly detection device 10, and may set the input weights, the synapse weights, and the output weights in accordance with the received random number.

Furthermore, the setting unit 30 sets the threshold for the determination unit 28 before the operation of determining an anomaly. The setting unit 30 may set the threshold in accordance with information received from an external device such as an input device operated by a user. The setting unit 30 may set the threshold in accordance with information received from an external device at the time of factory shipment of the anomaly detection device 10 or before implementation of the anomaly detection device 10.

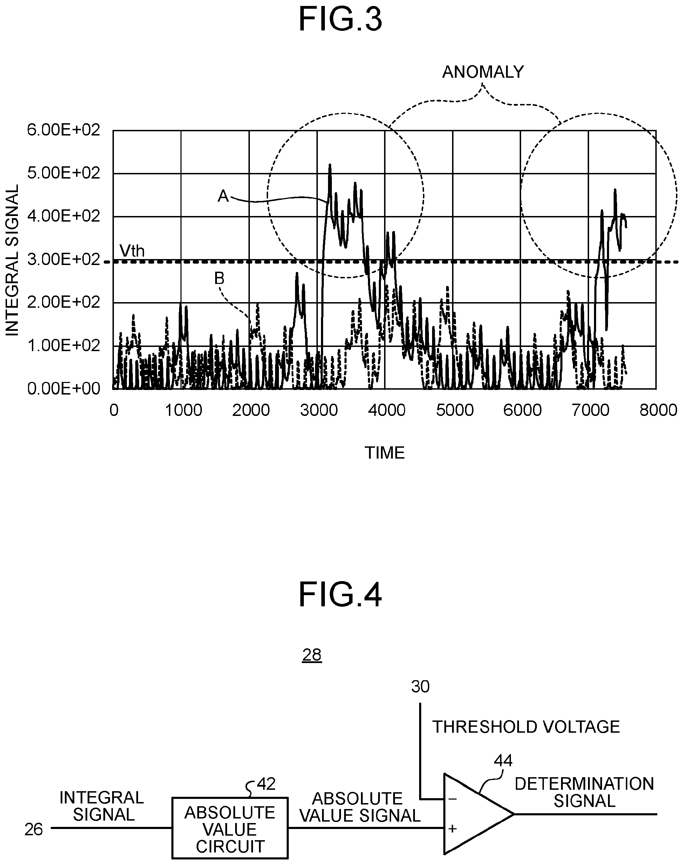

Fig. 3 is a diagram illustrating a simulation result of the integral signal output from the anomaly detection device 10.

In Fig. 3, A indicates a simulation result of the integral signal that is obtained in a case of giving white noise to the anomaly detection device 10 as the input signal. In Fig. 3, B indicates a simulation result of the integral signal that is obtained in a case of giving a signal obtained by adding an additional signal to white noise to the anomaly detection device 10 as the input signal.

As illustrated in Fig. 3, an amplitude of the integral signal indicated by A does not exceed a certain threshold voltage (Vth). On the other hand, an amplitude of the integral signal indicated by B exceeds the threshold voltage (Vth) in some periods. It is estimated that a portion where the amplitude is larger than the threshold voltage (Vth) is influenced by the additional signal added to the white noise. That is, it is estimated that the portion where the amplitude is larger than the threshold voltage (Vth) is a portion representing an instantaneous anomaly in the observation target device 100. Thus, the anomaly detection device 10 can detect that an anomaly has occurred in the observation target device 100 by comparing the integral signal with the threshold voltage (Vth).

As described above, the anomaly detection device 10 can detect an anomaly in the observation target device 100 with a simple configuration such as an analog circuit, for example, without performing complicated learning processing and complicated numerical processing. Accordingly, the anomaly detection device 10 is implemented at low cost, and can be disposed in the vicinity of the observation target device 100, for example. The anomaly detection device 10 is not required to transmit a large amount of data to a server and the like or perform complicated information processing on a server and the like, so that the anomaly detection device 10 can detect an anomaly at high speed in real time.

Fig. 4 is a diagram illustrating a first example of a configuration of the determination unit 28. The determination unit 28 may have a configuration as illustrated in Fig. 4, for example. The determination unit 28 according to the first example illustrated in Fig. 4 includes an absolute value circuit 42 and a comparator circuit 44.

The absolute value circuit 42 receives the integral signal as a voltage signal from the output unit 26. The absolute value circuit 42 then generates an absolute value signal representing the absolute value of the integral signal by a voltage.

The comparator circuit 44 receives the absolute value signal from the absolute value circuit 42. Furthermore, for the comparator circuit 44, a threshold voltage representing a threshold is set by the setting unit 30. In a case in which the absolute value signal is equal to or smaller than the threshold voltage, the comparator circuit 44 outputs a determination signal having a value representing normality (for example, 0). In a case in which the absolute value signal is larger than the threshold voltage, the comparator circuit 44 outputs a determination signal having a value representing an anomaly (for example, 1).

The determination unit 28 according to the first example having the configuration as described above can generate the determination signal representing whether the observation target device 100 is normal or abnormal based on the integral signal.

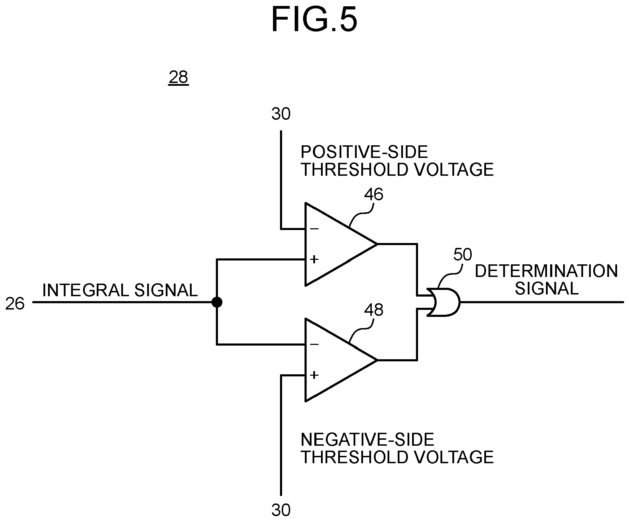

Fig. 5 is a diagram illustrating a second example of the configuration of the determination unit 28. The determination unit 28 may have a configuration as illustrated in Fig. 5, for example. The determination unit 28 according to the second example illustrated in Fig. 5 includes a positive-side comparator circuit 46, a negative-side comparator circuit 48, and an OR circuit 50.

The positive-side comparator circuit 46 receives the integral signal as a voltage signal from the output unit 26. Additionally, the positive-side comparator circuit 46 receives a positive-side threshold voltage. The positive-side threshold voltage is a voltage the polarity of which is positive and the absolute value of which represents a threshold set by the setting unit 30. The positive-side comparator circuit 46 outputs a positive-side determination signal that becomes a value representing an anomaly (for example, 1) in a case in which the integral signal is larger than the positive-side threshold voltage, and becomes a value representing normality (for example, 0) in a case in which the integral signal is equal to or smaller than the positive-side threshold voltage.

The negative-side comparator circuit 48 receives the integral signal from the output unit 26. Additionally, the negative-side comparator circuit 48 receives a negative-side threshold voltage. The negative-side threshold voltage is a voltage the polarity of which is negative and the absolute value of which represents a threshold set by the setting unit 30. The negative-side comparator circuit 48 outputs a negative-side determination signal that becomes a value representing an anomaly (for example, 1) in a case in which the integral signal is smaller than the negative-side threshold voltage, and becomes a value representing normality (for example, 0) in a case in which the integral signal is equal to or larger than the negative-side threshold voltage.

The OR circuit 50 receives the positive-side determination signal and the negative-side determination signal. The OR circuit 50 outputs a determination signal representing a logical sum of the positive-side determination signal and the negative-side determination signal. That is, the OR circuit 50 outputs a value representing an anomaly (for example, 1) in a case in which any one of the positive-side determination signal and the negative-side determination signal is a value representing an anomaly, and outputs a value representing normality (for example, 0) in a case in which both of the positive-side determination signal and the negative-side determination signal are values representing normality.

The determination unit 28 according to the second example having the configuration as described above can also generate the determination signal representing whether the observation target device 100 is normal or abnormal based on the integral signal.

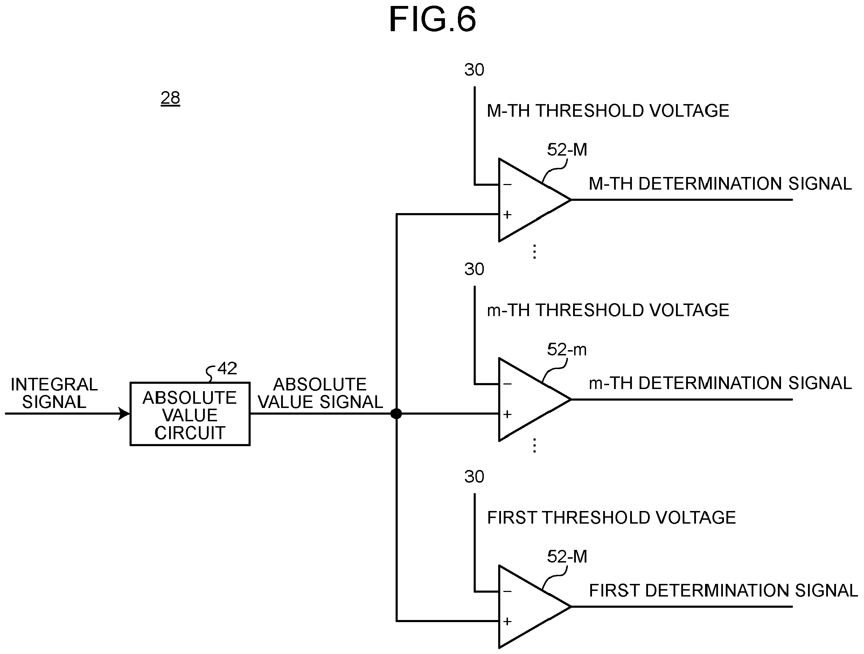

Fig. 6 is a diagram illustrating a third example of the configuration of the determination unit 28. The determination unit 28 may have a configuration as illustrated in Fig. 6, for example. The determination unit 28 according to the third example illustrated in Fig. 6 includes the absolute value circuit 42, and first to M-th comparator circuits 52-1 to 52-M (M is an integral number equal to or larger than 2).

For the determination unit 28, first to M-th thresholds are set by the setting unit 30. The determination unit 28 acquires first to M-th threshold voltages representing the first to the M-th thresholds set by the setting unit 30.

The first threshold voltage is the smallest among the first to M-th threshold voltages. An m-th threshold voltage (m is an integral number that is equal to or larger than 1 and equal to or smaller than M) is the m-th smallest among the first to M-th threshold voltages. The M-th threshold voltage is the M-th smallest among the first to M-th threshold voltages, that is, the largest.

The absolute value circuit 42 receives the integral signal. The absolute value circuit 42 generates an absolute value signal representing the absolute value of the integral signal by a voltage.

The first comparator circuit 52-1 acquires the first threshold voltage. The first comparator circuit 52-1 outputs a first determination signal that becomes a value representing an anomaly (for example, 1) in a case in which the absolute value signal is larger than the first threshold voltage, and becomes a value representing normality (for example, 0) in a case in which the absolute value signal is equal to or smaller than the first threshold voltage.

An m-th comparator circuit 52-m acquires the m-th threshold voltage. The m-th comparator circuit 52-m outputs an m-th determination signal that becomes a value representing an anomaly (for example, 1) in a case in which the absolute value signal is larger than the m-th threshold voltage, and becomes a value representing normality (for example, 0) in a case in which the absolute value signal is equal to or smaller than the m-th threshold voltage.

The M-th comparator circuit 52-M acquires the M-th threshold voltage. The M-th comparator circuit 52-M outputs an M-th determination signal that becomes a value representing an anomaly (for example, 1) in a case in which the absolute value signal is larger than the M-th threshold voltage, and becomes a value representing normality (for example, 0) in a case in which the absolute value signal is equal to or smaller than the M-th threshold voltage.

The determination unit 28 as described above outputs the first to the M-th determination signals. The first to the M-th determination signals represent levels of an anomaly in the observation target device 100. In a case in which all of the first to the M-th determination signals represent normality, it is represented that the observation target device 100 is normal. In a case in which the first determination signal represents an anomaly and the other signals represent normality, the first to the M-th determination signals represent an anomaly of a first level, which is the lowest level. In a case in which the first to the m-th determination signals represent an anomaly and the other signals represent normality, the first to the M-th determination signals represent an anomaly of an m-th level, which is the m-th level. In a case in which all of the first to the M-th determination signals represent an anomaly, they represent an anomaly of an M-th level, which is the highest level.

The determination unit 28 according to the third example having the configuration as described above can generate the determination signal representing the level of the anomaly in the observation target device 100.

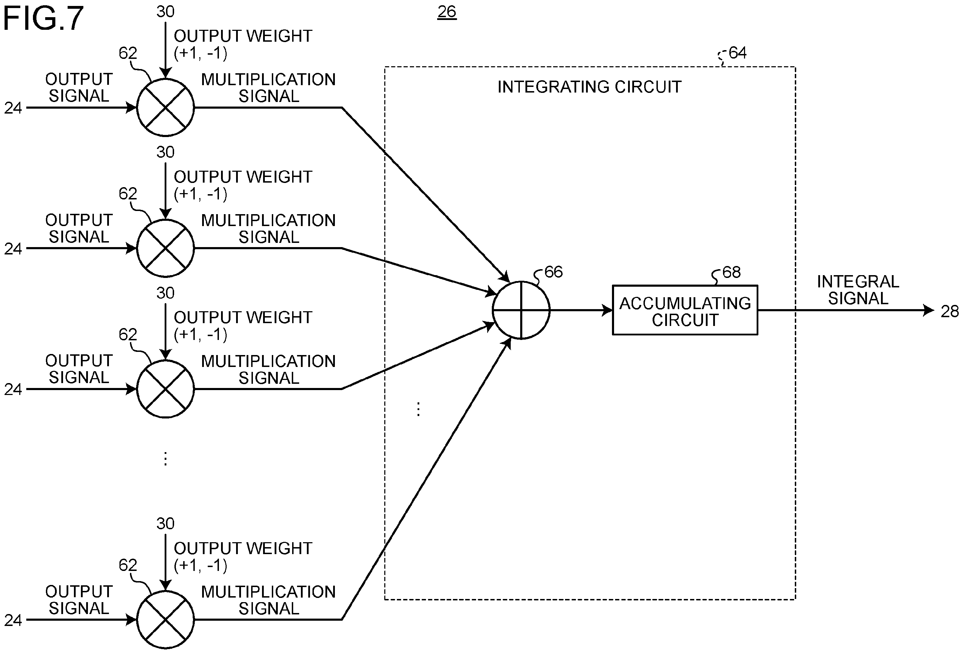

Fig. 7 is a diagram illustrating a first example of a configuration of the output unit 26. The output unit 26 may have a configuration as illustrated in Fig. 7, for example.

The output unit 26 according to the first example illustrated in Fig. 7 acquires a plurality of output signals each of which is a voltage signal from the reservoir unit 24. The output unit 26 according to the first example includes a plurality of multiplication circuits 62 and an integrating circuit 64.

Each of the multiplication circuits 62 acquires any one of the output signals. For each of the multiplication circuits 62, a corresponding one of the output weights is set by the setting unit 30. Each of the multiplication circuits 62 generates one of the multiplication signals by multiplying the acquired output signal by the set corresponding output weight.

Herein, each of the output weights is a positive predetermined value or a negative predetermined value, and set for each of the output signals. In the present arrangement, each of the output weights is -1 or +1.

Thus, in a case in which the corresponding output weight is the positive predetermined value, each of the multiplication circuits 62 can output the multiplication signal the absolute value of which is obtained by multiplying the absolute value of the output signal by a predetermined value, the multiplication signal having the same polarity as that of the output signal, by multiplying the acquired output signal by the corresponding output weight. Additionally, in a case in which the corresponding output weight is the negative predetermined value, each of the multiplication circuits 62 can output the multiplication signal the absolute value of which is obtained by multiplying the absolute value of the output signal by the predetermined value, the multiplication signal having a polarity reverse to that of the output signal, by multiplying the acquired output signal by the corresponding output weight.

The integrating circuit 64 includes an adding circuit 66 and an accumulating circuit 68.

The adding circuit 66 acquires the multiplication signals generated by the multiplication circuits 62. The adding circuit 66 generates an addition signal obtained by adding up the acquired multiplication signals.

The accumulating circuit 68 acquires the addition signal from the adding circuit 66. The accumulating circuit 68 accumulates addition signals to perform time integration. For example, in a case in which the addition signal is a voltage signal, the accumulating circuit 68 is a capacitor. The accumulating circuit 68 then supplies the signal obtained by performing time integration for the addition signals to the determination unit 28 as an integral signal.

In this way, the output unit 26 can generate the multiplication signals by multiplying each of the output signals by the output weight set in advance, and generate the integral signal obtained by time integration through adding up the multiplication signals.

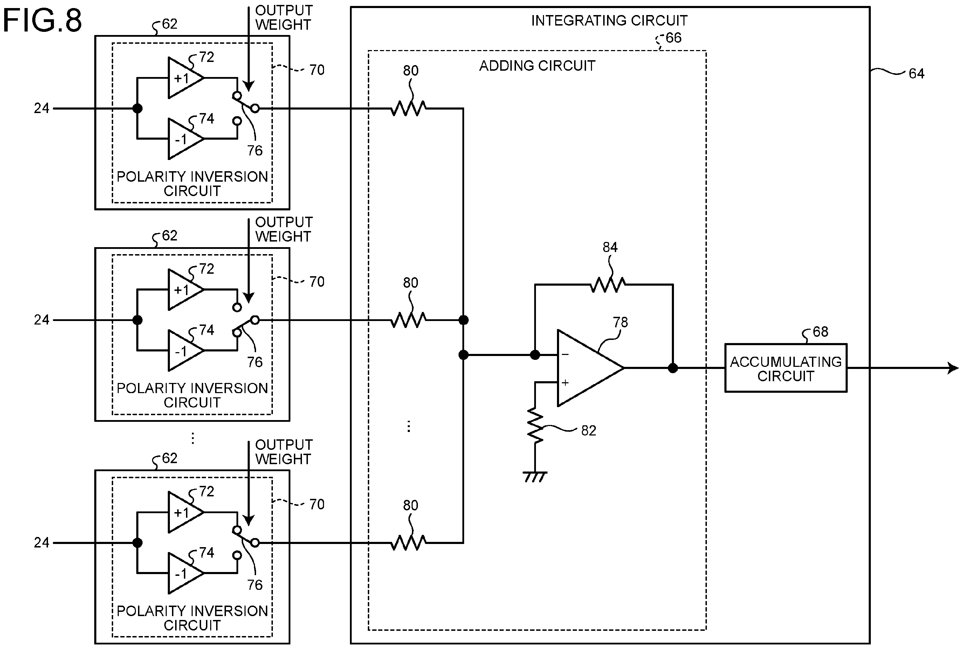

Fig. 8 is a diagram illustrating a second example of the configuration of the output unit 26. The output unit 26 may have a configuration as illustrated in Fig. 8, for example.

For example, each of the multiplication circuits 62 includes a polarity inversion circuit 70. The polarity inversion circuit 70 includes a non-inverting amplifier circuit 72, an inverting amplifier circuit 74, and a switching circuit 76.

The non-inverting amplifier circuit 72 is configured by an operational amplifier and a resistor, and outputs a voltage obtained by multiplying the input voltage by a predetermined value with the same polarity. The non-inverting amplifier circuit 72 acquires a corresponding output signal as a voltage signal, and outputs a voltage signal having the same polarity obtained by multiplying the acquired output signal by the predetermined value.

The inverting amplifier circuit 74 is configured by an operational amplifier and a resistor, and outputs a voltage obtained by multiplying the input voltage by the predetermined value with a reverse polarity. The inverting amplifier circuit 74 acquires a corresponding output signal as a voltage signal, and outputs a voltage signal having a reverse polarity obtained by multiplying the acquired output signal by the predetermined value. In the present arrangement, the inverting amplifier circuit 74 amplifies the input voltage with an amplification factor of reverse polarity the absolute value of which is the same as that of the non-inverting amplifier circuit 72.

The switching circuit 76 switches, in accordance with the set output weight, any one of the voltage signal output from the non-inverting amplifier circuit 72 and the voltage signal output from the inverting amplifier circuit 74, and outputs it as a multiplication signal. For example, in a case in which the output weight is the positive predetermined value (for example, +1), the switching circuit 76 outputs, as the multiplication signal, the voltage signal output from the non-inverting amplifier circuit 72. For example, in a case in which the output weight is the negative predetermined value (for example, - 1), the switching circuit 76 outputs, as the multiplication signal, the voltage signal output from the non-inverting amplifier circuit 72.

In a case in which the set output weight is the positive predetermined value, the polarity inversion circuit 70 as described above can output the multiplication signal the absolute value of which is obtained by multiplying the absolute value of the output signal by a predetermined value and the polarity of which is the same as that of the output signal. In a case in which the set output weight is the negative predetermined value, the polarity inversion circuit 70 can output the multiplication signal the absolute value of which is obtained by multiplying the absolute value of the output signal by a predetermined value and the polarity of which is reverse to that of the output signal.

The adding circuit 66 is a circuit including an operational amplifier and a resistor. For example, the adding circuit 66 includes a first operational amplifier 78, a plurality of input resistors 80, a non-inverting input resistor 82, and a feedback resistor 84.

The input resistors 80 correspond to the multiplication circuits 62 on a one-to-one basis. All of the input resistors 80 have the same resistance value. Each of the input resistors 80 is connected between an output end of the corresponding multiplication circuit 62 and an inverting input terminal of the first operational amplifier 78.

The non-inverting input resistor 82 is connected between a non-inverting input terminal of the first operational amplifier 78 and the ground. The feedback resistor 84 is connected between an output terminal and the inverting input terminal of the first operational amplifier 78.

The adding circuit 66 having the configuration as described above can generate the addition signal obtained by adding up the multiplication signals generated by the multiplication circuits 62.

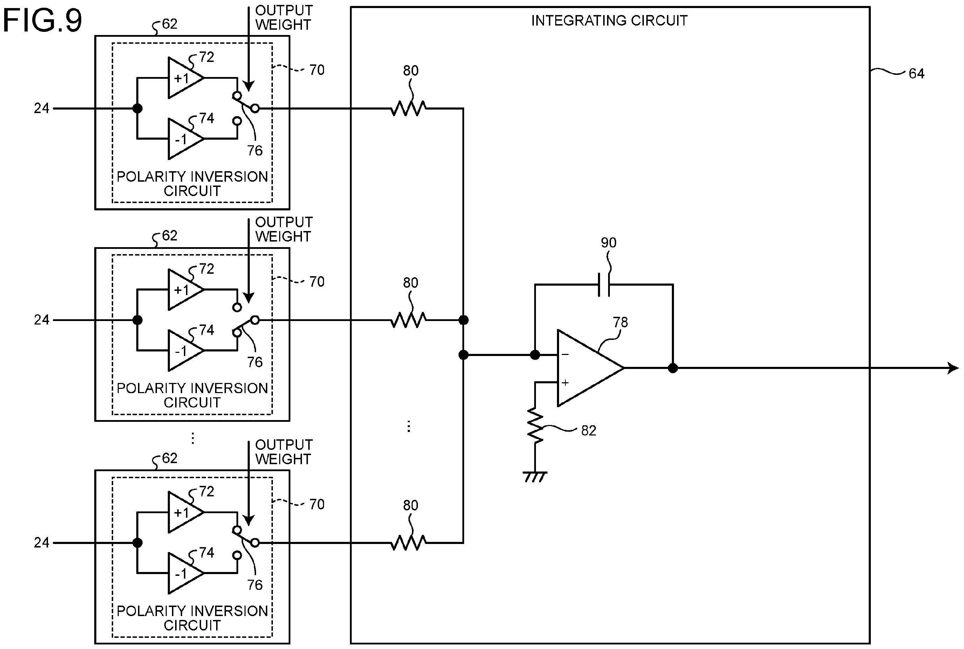

Fig. 9 is a diagram illustrating a third example of the configuration of the output unit 26. The integrating circuit 64 included in the output unit 26 may have a configuration as illustrated in Fig. 9, for example.

For example, the integrating circuit 64 according to the third example includes the first operational amplifier 78, the input resistors 80, the non-inverting input resistor 82, and a feedback capacitor 90. The integrating circuit 64 according to the third example has a configuration including the feedback capacitor 90 in place of the feedback resistor 84 in the adding circuit 66 illustrated in Fig. 8. The feedback capacitor 90 is connected between the output terminal and the inverting input terminal of the first operational amplifier 78.

The integrating circuit 64 having the configuration as described above also functions as a circuit that performs an addition and integration operations using the operational amplifier. Thus, the integrating circuit 64 having the configuration as described above can generate the integral signal obtained by time integration through adding up the multiplication signals.

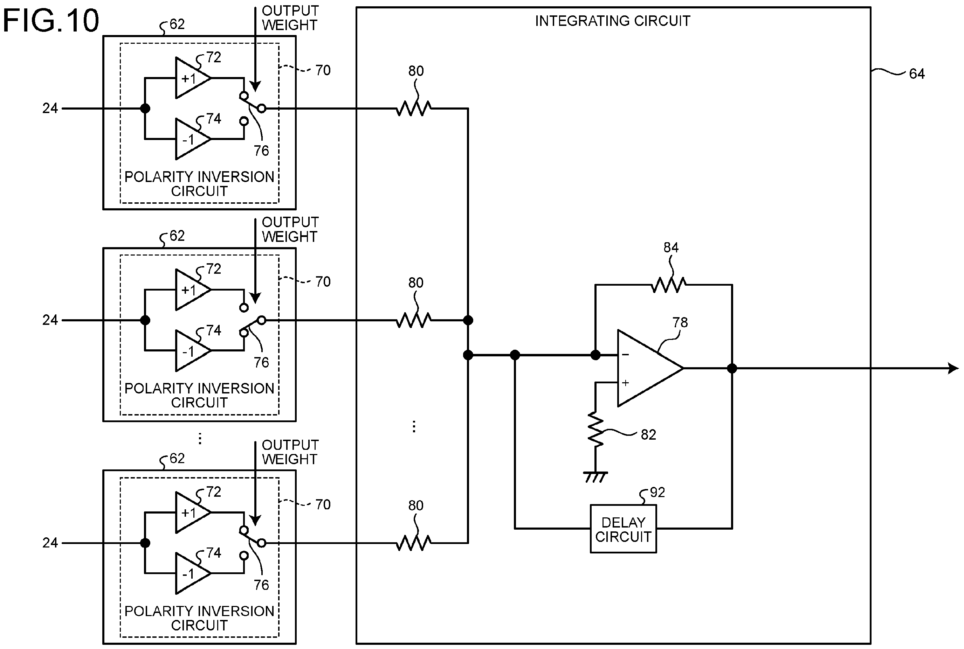

Fig. 10 is a diagram illustrating a fourth example of the configuration of the output unit 26. The integrating circuit 64 included in the output unit 26 may have a configuration as illustrated in Fig. 10, for example.

For example, the integrating circuit 64 according to the fourth example includes the first operational amplifier 78, the input resistors 80, the non-inverting input resistor 82, the feedback resistor 84, and a delay circuit 92. The integrating circuit 64 according to the fourth example has a configuration further including the delay circuit 92 in addition to the configuration of the adding circuit 66 illustrated in Fig. 8.

The delay circuit 92 is connected between the output terminal and the inverting input terminal of the first operational amplifier 78. The delay circuit 92 delays the signal output from the output terminal of the first operational amplifier 78 by a minute time, and feeds back the signal to the inverting input terminal.

The integrating circuit 64 having the configuration as described above also functions as a circuit that performs an addition and integration operations using the operational amplifier. Thus, the integrating circuit 64 having the configuration as described above can also generate the integral signal obtained by time integration through adding up the multiplication signals.

### Second arrangement

Next, the following describes the anomaly detection device 10 according to a second arrangement. The anomaly detection device 10 according to the second arrangement has substantially the same function and configuration as those of the anomaly detection device 10 according to the first arrangement described above with reference to Fig. 1 to Fig. 10. Thus, in the description about the anomaly detection device 10 according to the second arrangement, substantially the same constituent element as the constituent element of the anomaly detection device 10 according to the first arrangement is denoted by the same reference numeral, and detailed description thereof will not be repeated except differences. The same applies to the third arrangement and the following description.

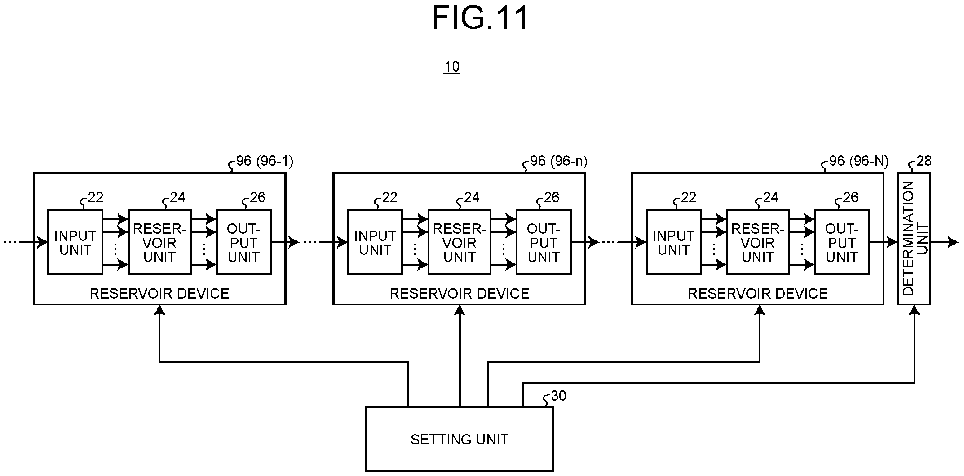

Fig. 11 is a diagram illustrating a configuration of the anomaly detection device 10 according to the second arrangement. The anomaly detection device 10 according to the second arrangement includes N (N is an integral number equal to or larger than 2) reservoir devices 96, the determination unit 28, and the setting unit 30.

The N reservoir devices 96 are connected in series. Each of the N reservoir devices 96 connected in series includes the input unit 22, the reservoir unit 24, and the output unit 26.

A first reservoir device 96-1 of the N reservoir devices 96 acquires, as the input signal, a time-series signal that is detected by observing the observation target device 100.

An n-th (n is an integral number that is equal to or larger 2 equal to or smaller than N) reservoir device 96-n of the N reservoir devices 96 acquires, as the input signal, an integral signal generated by an (n-1)-th reservoir device 96-(n-1) of the N reservoir devices 96. That is, each of the reservoir devices other than the first reservoir device 96-1 of the N reservoir devices 96 acquires, as the input signal, the integral signal generated by the reservoir device 96 at a preceding stage.

The determination unit 28 acquires the integral signal generated by an N-th reservoir device 96-N of the N reservoir devices 96. The determination unit 28 then determines whether the observation target device 100 is normal or abnormal based on the acquired integral signal, and outputs a determination signal representing a determination result.

The setting unit 30 independently sets, for each of the N reservoir devices 96, a plurality of input weights, a plurality of synapse weights, a plurality of output weights, and internal connection of the reservoir unit 24.

The anomaly detection device 10 according to the third arrangement having the configuration as described above can implement more random processing by N reservoir units 24. Due to this, the anomaly detection device 10 can detect an anomaly in the observation target device 100 with higher accuracy.

Furthermore, in the anomaly detection device 10 according to the second arrangement, the N reservoir devices 96 are connected in series, so that a signal is transmitted while being gradually changed, and a difference is emphasized. Due to this, the anomaly detection device 10 can easily detect an anomaly by the determination unit 28. Furthermore, in the anomaly detection device 10 according to the second arrangement, each of the N reservoir devices 96 is implemented by an analog circuit, so that there is no speed-limiting point caused by performing digital processing, and processing can be performed at high speed even if the processing is complicated.

### Third arrangement

Next, the following describes the anomaly detection device 10 according to the third arrangement.

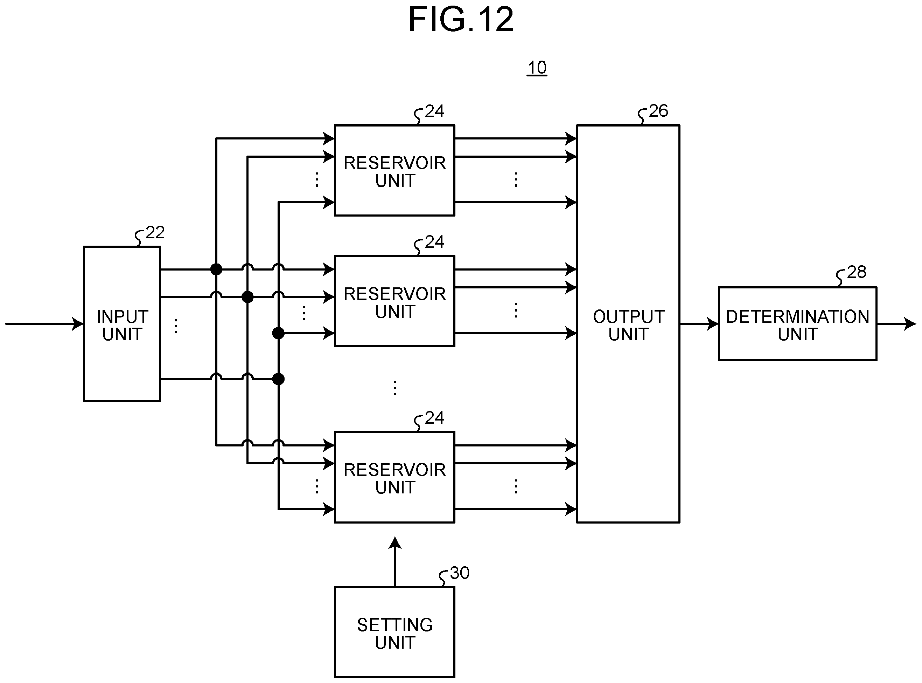

Fig. 12 is a diagram illustrating a configuration of the anomaly detection device 10 according to the third arrangement. The anomaly detection device 10 according to the third arrangement includes the input unit 22, the N reservoir units 24, the output unit 26, the determination unit 28, and the setting unit 30.

Each of the N reservoir units 24 acquires a plurality of intermediate signals from the input unit 22. The N reservoir units 24 output a plurality of output signals each having a waveform that has reproducibility for a waveform of the input signal.

However, the synapse weights set for each of the N reservoir units 24 are different from those of the other reservoir units 24. That is, an internal bond strength and a connection relation of each of the N reservoir units 24 are different from those of the other reservoir units 24. Thus, each of the N reservoir units 24 outputs a plurality of output signals each having a waveform different from that of the other reservoir units 24.

The output unit 26 acquires the output signals output from each of the N reservoir units 24. The output unit 26 generates a plurality of multiplication signals by multiplying each of the acquired output signals by an output weight set in advance. Furthermore, the output unit 26 generates an integral signal obtained by time integration through adding up the generated multiplication signals.

The anomaly detection device 10 according to the third arrangement having the configuration as described above can implement more random processing by the N reservoir units 24. Due to this, the anomaly detection device 10 can detect an anomaly in the observation target device 100 with higher accuracy.

Hardware configuration of information processing device

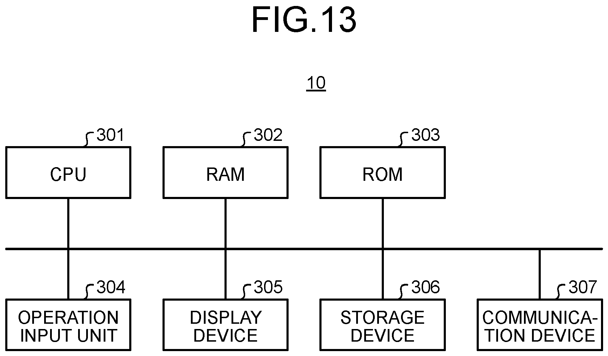

Fig. 13 is a diagram illustrating an example of a hardware configuration of the information processing device.

The anomaly detection device 10 may be implemented by a computer (information processing device) having a hardware configuration as illustrated in Fig. 13, for example, in place of the analog circuit. In this case, the anomaly detection device 10 includes a central processing unit (CPU) 301, a random access memory (RAM) 302, a read only memory (ROM) 303, an operation input device 304, a display device 305, a storage device 306, and a communication device 307. These parts are connected via a bus.

The CPU 301 is a processor that performs arithmetic processing, control processing, and the like in accordance with a computer program. The CPU 301 performs various kinds of processing in cooperation with the computer program stored in the ROM 303, the storage device 306, and the like using a predetermined area of the R_AM 302 as a working area.

The RAM 302 is a memory such as a synchronous dynamic random access memory (SDRAM). The R_AM 302 functions as the working area for the CPU 301. The ROM 303 is a memory that stores a computer program and various kinds of information in a non-rewritable manner.

The operation input device 304 is an input device such as a mouse and a keyboard. The operation input device 304 receives information operated and input by the user as an instruction signal, and outputs the instruction signal to the CPU 301.

The display device 305 is a display device such as a liquid crystal display (LCD). The display device 305 displays various kinds of information based on a display signal from the CPU 301.

The storage device 306 is a device that writes and reads out data into/from a semiconductor storage medium such as a flash memory, a storage medium that can magnetically or optically record data, or the like. The storage device 306 writes and reads out data into/from the storage medium in response to control by the CPU 301. The communication device 307 communicates with an external device via a network in response to control by the CPU 301.

A computer program executed by the computer has a module configuration including an input module, a reservoir module, an output module, a determination module, and a setting module.

When being loaded into the RAM 302 to be executed by the CPU 301 (processor), this computer program causes the computer to function as the input unit 22, the reservoir unit 24, the output unit 26, the determination unit 28, and the setting unit 30. Part or all of the input unit 22, the reservoir unit 24, the output unit 26, the determination unit 28, and the setting unit 30 may be implemented by a hardware circuit.

The computer program executed by the computer is recorded and provided in a computer-readable recording medium such as a CD-ROM, a flexible disk, a CD-R, and a digital versatile disk (DVD), as an installable or executable file for the computer.

The computer program may be stored in a computer connected to a network such as the Internet and provided by being downloaded via the network. The computer program may be provided or distributed via a network such as the Internet. The computer program executed by the anomaly detection device 10 may be embedded and provided in the ROM 303, for example.

While certain arrangements have been described, these arrangements have been presented by way of example only, and are not intended to limit the scope of the claims. Indeed, the apparatuses described herein may be embodied in a variety of other forms; furthermore various omissions, substitutions and changes in the form of the apparatuses described herein may be made.

### Additional notes

The arrangements described above can be summarized in the following Technical Ideas:

### Technical Idea 1

An anomaly detection device comprising:
an input unit configured to acquire a time-series input signal detected by observing an observation target device, and output a plurality of intermediate signals corresponding to the input signal;
a reservoir unit configured to acquire the plurality of intermediate signals, and output a plurality of output signals each having a waveform that has reproducibility for a waveform of the input signal;
an output unit configured to acquire the plurality of output signals, generate a plurality of multiplication signals by respectively multiplying the plurality of output signals by output weights set in advance, and generate an integral signal obtained by time integration through adding up the plurality of multiplication signals; and
a determination unit configured to determine whether the observation target device is normal or abnormal based on a result of comparison between the integral signal and a threshold set in advance, and output a determination signal representing a determination result, wherein
the output weights by which the plurality of output signals are respectively multiplied, each represent a positive predetermined value or a negative predetermined value, and are respectively set for the plurality of output signals.

### Technical Idea 2

The anomaly detection device according to Technical Idea 1, wherein the input signal is a signal such that a value determined in advance is obtained by averaging the input signal in a time direction.

### Technical Idea 3

The anomaly detection device according to Technical Idea 2, wherein the determination unit is configured to determine that the observation target device is abnormal in a case in which an absolute value of the integral signal is larger than the threshold.

### Technical Idea 4

The anomaly detection device according to Technical Idea 3, wherein
the determination unit comprises:
an absolute value circuit configured to generate an absolute value signal representing the absolute value of the integral signal; and
a comparator circuit configured to compare the absolute value signal with the threshold, to output the determination signal.

### Technical Idea 5

The anomaly detection device according to any one of Technical Ideas 1 to 4, wherein
the output unit comprises:
a plurality of multiplication circuits each configured to acquire any one of the plurality of output signals, and multiply the acquired output signal by a corresponding output weight to generate any one of the plurality of multiplication signals; and
an integrating circuit configured to generate the integral signal obtained by time integration through adding up the plurality of multiplication signals.

### Technical Idea 6

The anomaly detection device according to Technical Idea 5, wherein
each of the multiplication circuits is configured to acquire a corresponding output signal of the plurality of output signals, and includes a polarity inversion circuit for which the output weight is set in advance, and
the polarity inversion circuit is configured to:
   output a multiplication signal obtained by multiplying the output signal by a predetermined value without inverting a polarity of the output signal in a case in which the set output weight is the positive predetermined value; and
   output a multiplication signal obtained by multiplying the output signal by a predetermined value while inverting the polarity of the output signal in a case in which the set output weight is the negative predetermined value.

### Technical Idea 7

The anomaly detection device according to Technical Idea 5 or 6, wherein
each of the plurality of multiplication signals is a voltage signal, and
the integrating circuit comprises:
   an adding circuit configured to generate an addition signal obtained by voltage-adding the plurality of multiplication signals; and
   an accumulating circuit configured to accumulate an electric charge corresponding to a voltage of the addition signal.

### Technical Idea 8

The anomaly detection device according to Technical Idea 5 or 6, wherein
each of the plurality of multiplication signals is a voltage signal,
the integrating circuit comprises:
   an operational amplifier circuit;
   a capacitor connected between an output terminal and an inverting input terminal of the operational amplifier circuit; and
   a plurality of input resistors corresponding to the plurality of multiplication signals on a one-to-one basis, and each having one terminal connected to the inverting input terminal, and another terminal to which a corresponding multiplication signal is applied, and
the output terminal of the operational amplifier circuit is configured to output the integral signal.

### Technical Idea 9

The anomaly detection device according to Technical Idea 5 or 6, wherein
each of the plurality of multiplication signals is a voltage signal,
the integrating circuit comprises:
   an operational amplifier circuit;
   a delay circuit connected between an output terminal and an inverting input terminal of the operational amplifier circuit; and
   a plurality of input resistors corresponding to the plurality of multiplication signals on a one-to-one basis, and each having one terminal connected to the inverting input terminal, and another terminal to which a corresponding multiplication signal is applied, and
the output terminal of the operational amplifier circuit is configured to output the integral signal.

### Technical Idea 10

The anomaly detection device according to any one of Technical Ideas 1 to 9, further comprising:
a setting unit configured to set the threshold in accordance with information received from an external device.

### Technical Idea 11

The anomaly detection device according to any one of Technical Ideas 1 to 10, further comprising:
a setting unit configured to set the output weights by which the plurality of output signals is respectively multiplied, in accordance with a random number generated by a random number generator.

### Technical Idea 12

An anomaly detection device comprising:
N reservoir devices, N being an integral number equal to or larger than 2; and
a determination unit, wherein
each of the N reservoir devices comprises:
   an input unit configured to output a plurality of intermediate signals corresponding to an input signal,
   a reservoir unit configured to acquire the plurality of intermediate signals, and output a plurality of output signals each having a waveform that has reproducibility for a waveform of the input signal, and
   an output unit configured to acquire the plurality of output signals, generate a plurality of multiplication signals by respectively multiplying the plurality of output signals by output weights set in advance, and generate an integral signal obtained by time integration through adding up the plurality of multiplication signals,
a first reservoir device of the N reservoir devices is configured to acquire, as the input signal, a time-series signal detected by observing an observation target device;
an n-th reservoir device of the N reservoir devices is configured to acquire, as the input signal, the integral signal generated by an (n-1)-th reservoir device of the N reservoir devices, n being an integral number that is equal to or larger than 2 and equal to or smaller than N,
the determination unit is configured to determine whether the observation target device is normal or abnormal based on a result of comparison between the integral signal generated by an N-th reservoir device of the N reservoir devices, and a threshold set in advance, and output a determination signal representing a determination result, and
the output weights by which the plurality of output signals are respectively multiplied, each represent a positive predetermined value or a negative predetermined value, and are respectively set for the plurality of output signals.

### Technical Idea 13

An anomaly detection device comprising:
an input unit configured to acquire a time-series input signal detected by observing an observation target device, and output a plurality of intermediate signals corresponding to the input signal;
N reservoir units, N being an integral number equal to or larger than 2;
an output unit; and
a determination unit, wherein
each of the N reservoir units is configured to acquire the plurality of intermediate signals, and output a plurality of output signals each having a waveform that has reproducibility for a waveform of the input signal,
the output unit is configured to acquire the plurality of output signals from each of the N reservoir units, generate a plurality of multiplication signals by respectively multiplying the plurality of acquired output signals by output weights set in advance, and generate an integral signal obtained by time integration through adding up the plurality of multiplication signals,
the determination unit is configured to determine whether the observation target device is normal or abnormal based on a result of comparison between the integral signal and a threshold set in advance, and output a determination signal representing a determination result, and
the output weights by which the plurality of output signals are respectively multiplied, each represents a positive predetermined value or a negative predetermined value, and are respectively set for the plurality of output signals.

### Technical Idea 14

An anomaly detection method for detecting whether an observation target device is normal or abnormal by an information processing device, the anomaly detection method comprising:
by the information processing device, acquiring a time-series input signal detected by observing the observation target device, and outputting a plurality of intermediate signals corresponding to the input signal,
by the information processing device, acquiring the plurality of intermediate signals, and outputting a plurality of output signals each having a waveform that has reproducibility for a waveform of the input signal,
by the information processing device, acquiring the plurality of output signals, generating a plurality of multiplication signals by respectively multiplying the plurality of output signals by output weights set in advance, and generating an integral signal obtained by time integration through adding up the plurality of multiplication signals; and
by the information processing device, determining whether the observation target device is normal or abnormal based on a result of comparison between the integral signal and a threshold set in advance, and outputting a determination signal representing a determination result, and
the output weights by which the plurality of output signals are respectively multiplied, each represent a positive predetermined value or a negative predetermined value, and are respectively set for the plurality of output signals.

### Technical Idea 15

A computer program product comprising a computer-readable medium including programmed instructions, the instructions causing an information processing device to function as an anomaly detection device, the computer instructions causing the information processing device to function as:
an input unit configured to acquire a time-series input signal detected by observing an observation target device, and output a plurality of intermediate signals corresponding to the input signal;
a reservoir unit configured to acquire the plurality of intermediate signals, and output a plurality of output signals each having a waveform that has reproducibility for a waveform of the input signal;
an output unit configured to acquire the plurality of output signals, generate a plurality of multiplication signals by respectively multiplying the plurality of output signals by output weights set in advance, and generate an integral signal obtained by time integration through adding up the plurality of multiplication signals; and
a determination unit configured to determine whether the observation target device is normal or abnormal based on a result of comparison between the integral signal and a threshold set in advance, and output a determination signal representing a determination result, wherein
the output weights by which the plurality of output signals are respectively multiplied, each represent a positive predetermined value or a negative predetermined value, and are respectively set for the plurality of output signals.

While certain arrangements have been described, these arrangements have been presented by way of example only, and are not intended to limit the scope of the inventions. Indeed, the novel arrangements described herein may be embodied in a variety of other forms; furthermore, various omissions, substitutions and changes in the form of the arrangements described herein may be made without departing from the spirit of the inventions. The accompanying claims and their equivalents are intended to cover such forms or modifications as would fall within the scope and spirit of the inventions.

## Claims

1. An anomaly detection device (10) comprising:
an input unit (22) configured to acquire a time-series input signal detected by observing an observation target device (100), and output a plurality of intermediate signals corresponding to the input signal;
a reservoir unit (24) configured to acquire the plurality of intermediate signals, and output a plurality of output signals each having a waveform that has reproducibility for a waveform of the input signal;
an output unit (26) configured to acquire the plurality of output signals, generate a plurality of multiplication signals by respectively multiplying the plurality of output signals by output weights set in advance, and generate an integral signal obtained by time integration through adding up the plurality of multiplication signals; and
a determination unit (28) configured to determine whether the observation target device (100) is normal or abnormal based on a result of comparison between the integral signal and a threshold set in advance, and output a determination signal representing a determination result, wherein
the output weights by which the plurality of output signals are respectively multiplied, each represent a positive predetermined value or a negative predetermined value, and are respectively set for the plurality of output signals.

2. The anomaly detection device (10) according to claim 1, wherein the input signal is a signal such that a value determined in advance is obtained by averaging the input signal in a time direction.

3. The anomaly detection device (10) according to claim 2, wherein the determination unit (28) is configured to determine that the observation target device (100) is abnormal in a case in which an absolute value of the integral signal is larger than the threshold.

4. The anomaly detection device (10) according to claim 3, wherein
the determination unit (28) comprises:
an absolute value circuit (42) configured to generate an absolute value signal representing the absolute value of the integral signal; and
a comparator circuit (44) configured to compare the absolute value signal with the threshold, to output the determination signal.

5. The anomaly detection device (10) according to any one of claims 1 to 4, wherein
the output unit (26) comprises:
a plurality of multiplication circuits (62) each configured to acquire any one of the plurality of output signals, and multiply the acquired output signal by a corresponding output weight to generate any one of the plurality of multiplication signals; and
an integrating circuit (64) configured to generate the integral signal obtained by time integration through adding up the plurality of multiplication signals.

6. The anomaly detection device (10) according to claim 5, wherein
each of the multiplication circuits (62) is configured to acquire a corresponding output signal of the plurality of output signals, and includes a polarity inversion circuit (70) for which the output weight is set in advance, and
the polarity inversion circuit (70) is configured to:
output a multiplication signal obtained by multiplying the output signal by a predetermined value without inverting a polarity of the output signal in a case in which the set output weight is the positive predetermined value; and
output a multiplication signal obtained by multiplying the output signal by a predetermined value while inverting the polarity of the output signal in a case in which the set output weight is the negative predetermined value.

7. The anomaly detection device (10) according to claim 5 or 6, wherein
each of the plurality of multiplication signals is a voltage signal, and
the integrating circuit (64) comprises:
an adding circuit (66) configured to generate an addition signal obtained by voltage-adding the plurality of multiplication signals; and
an accumulating circuit (68) configured to accumulate an electric charge corresponding to a voltage of the addition signal.

8. The anomaly detection device (10) according to claim 5 or 6, wherein
each of the plurality of multiplication signals is a voltage signal,
the integrating circuit (64) comprises:
an operational amplifier circuit (78);
a capacitor (90) connected between an output terminal and an inverting input terminal of the operational amplifier circuit (78); and
a plurality of input resistors (80) corresponding to the plurality of multiplication signals on a one-to-one basis, and each having one terminal connected to the inverting input terminal, and another terminal to which a corresponding multiplication signal is applied, and
the output terminal of the operational amplifier circuit (78) is configured to output the integral signal.

9. The anomaly detection device (10) according to claim 5 or 6, wherein
each of the plurality of multiplication signals is a voltage signal,
the integrating circuit (64) comprises:
an operational amplifier circuit (78);
a delay circuit (92) connected between an output terminal and an inverting input terminal of the operational amplifier circuit (78); and
a plurality of input resistors (80) corresponding to the plurality of multiplication signals on a one-to-one basis, and each having one terminal connected to the inverting input terminal, and another terminal to which a corresponding multiplication signal is applied, and
the output terminal of the operational amplifier circuit (78) is configured to output the integral signal.

10. The anomaly detection device (10) according to any one of claims 1 to 9, further comprising:
a setting unit (30) configured to set the threshold in accordance with information received from an external device.

11. The anomaly detection device (10) according to any one of claims 1 to 10, further comprising:
a setting unit (30) configured to set the output weights by which the plurality of output signals is respectively multiplied, in accordance with a random number generated by a random number generator.

12. An anomaly detection method for detecting whether an observation target device (100) is normal or abnormal by an information processing device, the anomaly detection method comprising:
by the information processing device, acquiring a time-series input signal detected by observing the observation target device (100), and outputting a plurality of intermediate signals corresponding to the input signal,
by the information processing device, acquiring the plurality of intermediate signals, and outputting a plurality of output signals each having a waveform that has reproducibility for a waveform of the input signal,
by the information processing device, acquiring the plurality of output signals, generating a plurality of multiplication signals by respectively multiplying the plurality of output signals by output weights set in advance, and generating an integral signal obtained by time integration through adding up the plurality of multiplication signals; and
by the information processing device, determining whether the observation target device (100) is normal or abnormal based on a result of comparison between the integral signal and a threshold set in advance, and outputting a determination signal representing a determination result, and
the output weights by which the plurality of output signals are respectively multiplied, each represent a positive predetermined value or a negative predetermined value, and are respectively set for the plurality of output signals.

13. A computer-readable medium including programmed instructions, the instructions causing an information processing device to function as an anomaly detection device (10), the computer instructions causing the information processing device to function as:
an input unit (22) configured to acquire a time-series input signal detected by observing an observation target device (100), and output a plurality of intermediate signals corresponding to the input signal;
a reservoir unit (24) configured to acquire the plurality of intermediate signals, and output a plurality of output signals each having a waveform that has reproducibility for a waveform of the input signal;
an output unit (26) configured to acquire the plurality of output signals, generate a plurality of multiplication signals by respectively multiplying the plurality of output signals by output weights set in advance, and generate an integral signal obtained by time integration through adding up the plurality of multiplication signals; and
a determination unit (28) configured to determine whether the observation target device (100) is normal or abnormal based on a result of comparison between the integral signal and a threshold set in advance, and output a determination signal representing a determination result, wherein
the output weights by which the plurality of output signals are respectively multiplied, each represent a positive predetermined value or a negative predetermined value, and are respectively set for the plurality of output signals.
